# EUROPEAN PATENT APPLICATION

(11) **EP 2 757 432 A2**
(43) Date of publication of application: **23.07.2014**
(21) Application number: 14151694.8
(22) Date of filing: 18.01.2014
(51) Int. Cl.: G05D 16/16, F17C 13/04

(54) **Adjustment device for automatically calibrating a pilot valve of a pressure reducer assembly for a fuel gas distribution network**

(30) Priority: 18.01.2013 IT TO20130044; 02.10.2013 IT TO20130793
(71) Applicant: Sezione Aurea Gas S.R.L.S., Bruino (IT)
(72) Inventor: Lavezzi, Riccardo, 10127 Torino (IT)
(74) Representative: Lovino, Paolo

(57) **Abstract**

An adjustment device (40) for automatically calibrating a pilot valve (27) in a fuel gas distribution network has a control chamber (42) adapted to receive a pneumatic signal defined by the loading pressure (pM) which is transmitted, in use, from a pilot valve (27) to a pressure reducer valve (20) through a loading line (30); the adjustment device (40) has a fully mechanical drive, configured so as to automatically increase the preload of a calibration spring (37) of the pilot valve (27) as the pneumatic signal value increases, and so as to automatically decrease the preload as the value of the pneumatic signal decreases.

## Description

The present invention relates to an adjustment device for automatically calibrating a pilot valve of a pressure reducer assembly for a fuel gas distribution network.

The device of the present invention can be applied to high, medium, low pressure distribution networks. For example, in low pressure networks one or more supply lines are provided, each of which receives fuel gas at a pressure which is reduced to a value typically of about 0.024 bar by means of a pressure reducer assembly. In medium pressure networks, such a value is about 0.5 bar.

In the case of multiple supply lines, after the pressure reduction, the fuel gas converges into a single delivery line, and is then conveyed from the distribution network to the users.

The aforesaid pressure reducer assembly generally comprises a pilot valve of the normally open type (typically referred to as "fail to open") and a pressure reducer valve of the normally closed type (typically referred to as "fail to close"), which opens/closes the supply line as a function of a control or loading pressure, which is adjusted by the pilot valve in response to the fuel gas delivery pressure. In particular, the pilot valve has a spring, the preload of which can be manually calibrated so as to set the delivery pressure set-point value in the distribution network.

The problem of dispersions along the distribution network before the gas reaches the users is generally very felt. Over the past five years, it has been statistically estimated about 1.4% of gas leakage with respect to the total distributed gas. In particular, it is estimated that there is one dispersion point for every 10 km of network.

Obviously, the higher the gas pressure in the distribution network, the higher will be the output gas amount from each dispersion point. On the other hand, the gas pressure needs to be sufficient to feed the fuel gas to the users, including the most distant ones, even under request peak conditions. Request peaks generally occur in given time slots, e.g. from 6:00 to 9:00am; from 11:00 to 2:00pm.; from 6:00 to 9:00pm. For all other time slots, the request is lower, therefore it would be useful to maintain the gas delivery pressure at a lower level, in order to contain the gas leakages, as mentioned above.

However, the pilot valve is generally designed to always maintain the delivery pressure in the network at a predetermined value (e.g. typically 24 mbar for low pressure networks, as mentioned above).

In order to vary the behavior of the pilot valve, it is known to adjust the spring preload in the pilot valve by means of timer devices which allow to maintain the delivery pressure in the network at a value slightly lower during the lower request time slots.

However, these systems are rather rigid, and thus cannot satisfy any extraordinary gas request during the time slots which are set as the predetermined lower consumption times slots.

Furthermore, the timer devices generally are of the mechanical spring loading type, and thus need to be manually reloaded in a periodic manner, e.g. once a week.

An alternative solution is disclosed in patent US2308187A, which teaches to provide an adjustment system comprising a Venturi tube for detecting the flow rate, which is arranged in the supply line downstream of the pressure reducer assembly, but such a system is relatively complex to be installed.

Adjustment systems of the electronic type are also known, which are fed by a battery for example and which calibrate the pilot valve according to a predetermined logic. However, this type of solutions employs relatively delicate and costly equipment.

It is the object of the present invention to provide a device for automatically calibrating a pilot valve of a pressure reducer assembly for a fuel gas distribution network, which allows to solve the above-mentioned problems in a simple and cost-effective manner.

According to the present invention, an adjustment device for automatically calibrating a pilot valve of a pressure reducer assembly for a fuel gas distribution network is provided as defined by claim 1.

The invention will now be described with reference to the accompanying drawings which show a non-limitative embodiment thereof, in which:
- figure 1 shows a diagrammatic cross-section of a preferred embodiment of the adjustment device for automatically calibrating a pilot valve of a pressure reducer assembly for a fuel gas distribution network according to the present invention;
- figure 2 shows the device in figure 1 on a magnified scale; and
- figures 3 and 4 are similar to figure 2 and show respective variants of the device of the present invention.

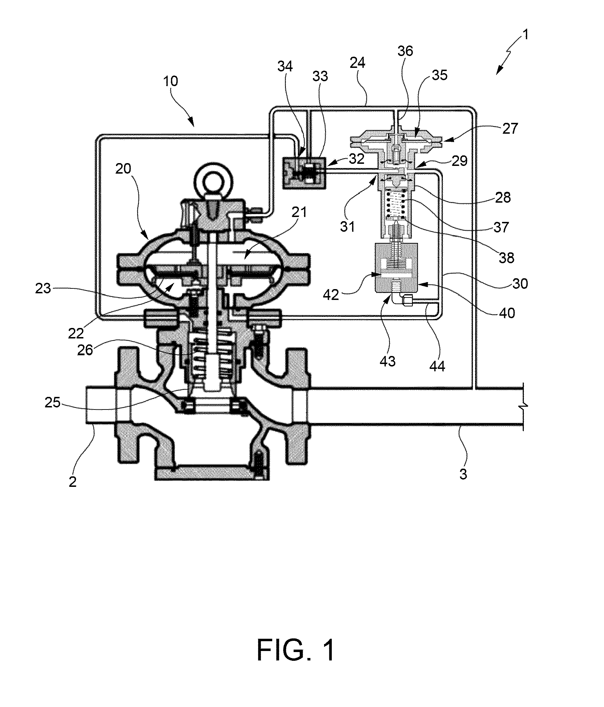

In figure 1, reference numeral 1 indicates a supply line to supply fuel gas to a distribution network (not shown) which conveys such a gas towards one or more users.

Line 1 comprises a tube 2, which receives the fuel gas at a pressure pA, and a delivery tube 3 which supplies such a gas to the distribution network at a delivery pressure pB, having a value lower than pressure pA.

Line 1 further comprises a pressure reducer assembly 10, which reduces the pressure while allowing the fuel gas flow rate required by the users to flow. Assembly 10 comprises a normally closed pressure reducer valve 20 of the proportional type (i.e. of the so-called "fail to close" type), configured so as to open/close a passageway from tube 2 to tube 3 in order to maintain the desired value for the delivery pressure pB.

In particular, the pressure reducer 20 comprises two chambers 21,22 separated by a membrane 23. Chamber 21 permanently communicates with tube 3 through a conduit 24 to receive a pneumatic signal defined by the delivery pressure pB, while chamber 22 is adapted to receive a pneumatic signal defined by a control or loading pressure pM.

The pressure reducer valve 20 further comprises a shutter 25 firmly connected to an intermediate portion of membrane 23 and movable in response to the delivery pressure pB and to the loading pressure pM for opening/closing the passageway from tube 2 to tube 3. Spring 26 exerts an elastic closing action in a direction agreeing with the closing action exerted by the delivery pressure pB and opposite to the opening action exerted by the loading pressure pM.

The valve assembly 10 further comprises a pilot valve 27, which is of the proportional, normally open type (i.e. of the so-called "fail to open" type) and comprises a valve body 28 having an output 29, which permanently communicates with chamber 22 through a loading line 30 for supplying the loading pressure pM.

Moreover, the valve body 28 has an input 31 communicating with the output 32 of a device 33, which provides a pressured control gas. In particular, device 33 is a pressure reducer (not described in detail) having an input 34, which preferably communicates with tube 3, preferably through an offtake line, and an inner passageway of the pressure reducer valve 20, in order to receive fuel gas as a control gas. In other words, the loading pressure pM is obtained through the fuel gas with low pressure from tube 2 by means of device 33 and adjusted by the pilot valve 27.

The pilot valve 27 comprises a chamber 35, which communicates with tube 3 through a connection or offtake 36, preferably connected to conduit 24, so as to receive a pneumatic signal defined by the fuel gas delivery pressure pB. Due to such a pneumatic signal the pilot valve 27 exerts a closing action on an inner passageway from input 31 to output 29. The pilot valve 27 further comprises a spring 37, which exerts an opening action opposite to the delivery pressure pB.

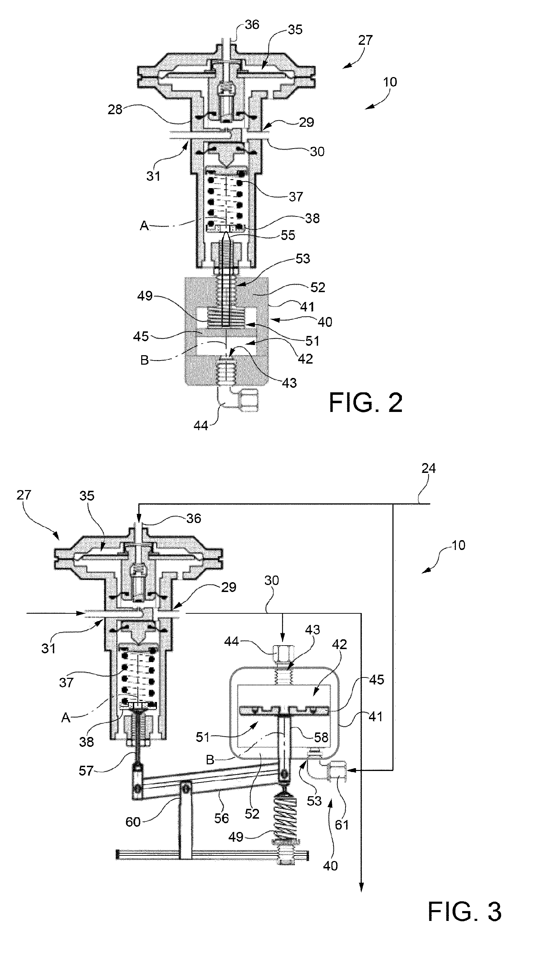

With reference to figure 2, the pilot valve 27 comprises a plate 38, which is preferably coaxial with spring 37 along an axis A and is axially movable with respect to the valve body 28 so as to vary the compression or preload of spring 37. Plate 38 is defined by a rigid disc or membrane or any movable element having similar function, made of metal or other material.

When the delivery pressure pB tends to exceed a calibration value pG, set by varying the preload of spring 37, the pilot valve 27 tends to close and thus to lower or cancel the loading pressure pM in the loading line 30. On the contrary, when the delivery pressure pB tends to drop under the calibration value pG, the pilot valve 27 tends to open proportionally to the variation of pressure pB. In a complete opening condition of the pilot valve 27, the loading pressure pM of the loading line 30 is the highest and is established by device 33. In other words, the pilot valve 27 adjusts the section of the inner passageway between input 31 and output 29, and determines the loading pressure pM in the loading line 30 and thus in chamber 22, so that the delivery pressure pB remains equal to the calibration value pG. Therefore, the "comparison" of the delivery pressure pB to the appropriately calibrated force of spring 37 creates the loading pressure pM.

According to the present invention, the preload of spring 37 and thus the calibration value pG are automatically varied by moving plate 38 as a function of the loading pressure pM by means of a mechanically driven and pneumatically controlled adjustment device 40.

The adjustment device 40 comprises a body 41, which is arranged in a fixed position with respect to the valve body 28 and defines a variable volume chamber 42 therein, having an input mouth 43 which communicates with the loading line 30 by means of a connection 44 so that chamber 42 can receive gas at the loading pressure pM.

According to a preferred solution (not shown), connection 44 is provided with a hole for the gas flow having a passage area defined in a calibrated manner, e.g. a fixed passage area defined in design or a passage area manually adjustable in a fine manner by means of a valve, e.g. a needle valve.

Body 41 houses a movable element 45, e.g. a membrane or piston, which is able to slide along an axis B, delimits an axial side of chamber 42, and is subjected to the opposing forces exerted by the loading pressure pM in chamber 42 and by spring 37. The adjustment device 40 preferably comprises an additional spring 49, which exerts on the movable element 45 an action which agrees with that of spring 37 and serves the main function of defining, with its preload, the minimum pressure threshold beyond which the movable element 45 starts shifting.

In particular, spring 49 is accommodated in a cavity 51 of body 41 and axially rests against the movable element 45, on one side, and against a wall 52 of body 41, on the other side. Cavity 51 is isolated from chamber 42 and has an input mouth 53 which communicates with the atmosphere, as shown in the embodiment in figure 2.

The movable element 45 is connected to plate 38 by means of a mechanical transmission 55 so as to exert a biasing force on plate 38. In the embodiment shown in figure 2, axes A and B coincide and the mechanical transmission 55 is defined by a rod axially extending through wall 52 and having an axial end which is arranged in cavity 51 and is fixed to the movable element 45. The axial end opposite to the rod is coupled to plate 38 so as to push it and thus compress spring 37 as the loading pressure pM increases in chamber 42. As the loading pressure pM decreases, instead, the preload of spring 37 tends to decrease, therefore spring 37 tends to stretch, i.e. plate 38 axially shifts towards the adjustment device 40 up to reach a minimum preload (i.e. a calibration value), which can be set in each system as desired.

The adjustment device 40 allows the level of delivery pressure pB in the distribution network to self-adjust within a predetermined range (e.g. between a maximum level of 26 mBar and a minimum level of 18 mBar), proportionally to the fuel gas request by the users. Indeed, as the fuel gas request increases, the delivery pressure pB would naturally tend to decrease, but the pilot valve 27 automatically tends to increase the loading pressure pM so as to open the pressure reducer valve 20 and thus either restore or maintain the delivery pressure pB at the calibration value pG, as explained above. At the same time, by virtue of the adjustment device 40, the increase of the loading pressure pM causes the calibration value pG to increase, which corresponds to an increase of the level of delivery pressure pB. On the contrary, the opposite situation occurs as the gas request by users decreases: the delivery pressure pB would naturally tend to increase but the pilot valve 27 tends to close for reducing the loading pressure pM, so as to close the pressure reducer valve 20 and thus either restore or maintain the delivery pressure pB at the calibration value pG; at the same time, the reduction of the loading pressure pM causes the preload of spring 37 to decrease, and thus the calibration value pG, which determines a lowering of the level of delivery pressure pB.

In other words, the adjustment device 40 uses the higher or lower loading pressure pM generated by the pilot valve 27 to automatically vary the calibration value pG of the pilot valve 27 itself, and therefore the pressure level in the network.

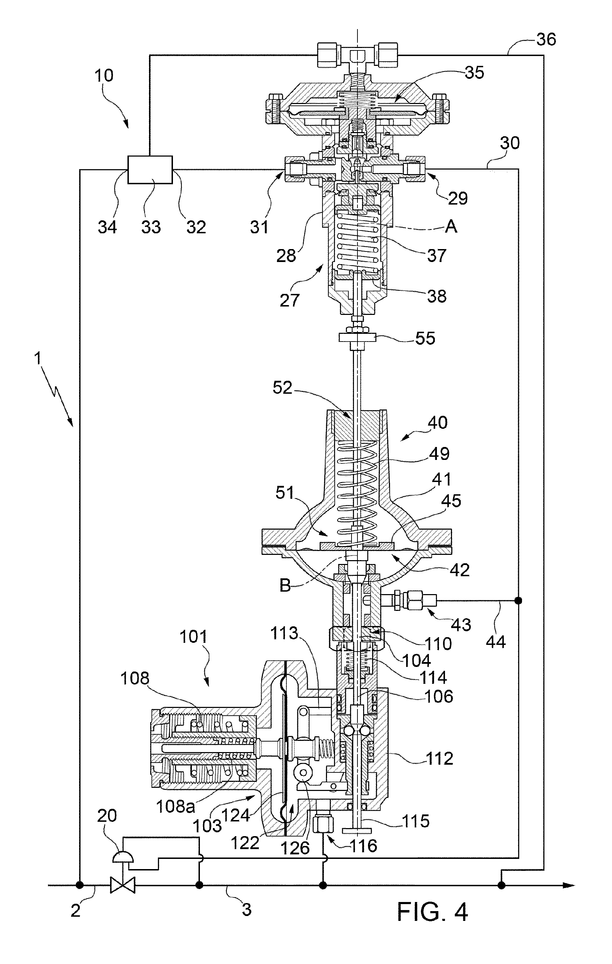

In the variants illustrated in figures 3 and 4, where possible, the various parts of the adjustment device 40 were identified by the same reference numbers used in figure 2.

The variant shown in figure 3 differs from that shown in figure 2 essentially in that the mechanical transmission 55 is defined by a leverage, which allows an amplification of the bias in the transmission of force from the movable element 45 to the plate 38. Such an amplification allows to limit the diameter of the movable element 45, and thus the size of body 41.

In particular, the leverage comprises a lever 56 and two rods 57,58, which are parallel, extend along axes A and B, respectively, and have respective ends coupled to plate 38 and movable element 45. At the opposite end, the rods 57,58 are coupled to lever 56 so as to define two arms of different length with respect to a fulcrum point 60. The fulcrum point 60 preferably has an adjustable position along lever 56, so as to vary the length of the two arms and thus finely calibrate the force amplification.

Moreover, as further possible difference with respect to figure 2, spring 49 is outside body 41 and acts directly on the mechanical transmission 55.

Again as further possible difference with respect to figure 2, the input mouth 53 communicates with tube 3 by means of a connection 61, preferably connected to conduit 24, for cavity 51 to receive a pneumatic signal defined by the delivery pressure pB: such a pressure exerts on the movable element 45 a force agreeing with that of springs 37,49, and serves the function of damping the movement of the movable element 45 and thus of stabilizing the adjustment under dynamic conditions. The pressurization of cavity 51 could also allow to eliminate the use of spring 49. A similar use of the pneumatic signal defined by the delivery pressure pB in cavity 51 may also be applied to the solution in figures 1 and 2, although it is not shown.

In use, without request of fuel gas by users, the adjustment device 40 does not exert any action. In case of gas request, instead, the higher the request, the higher the loading pressure pM. The latter, by overcoming the forces of springs 37 and 49, causes the movement of plate 38 by means of the mechanical transmission 55, so as to compress spring 37 and determine a new calibration, with the consequent increase of the delivery pressure pB.

When the gas request flow rate drops, the delivery pressure pB in the pilot valve 27 tends to become higher than the calibration of spring 37, therefore the loading pressure pB is automatically reduced and the pressure reducer valve 20 closes. With the reduction of the loading pressure pB, the calibration of spring 37 and thus the delivery pressure pB are also automatically reduced.

In the variant in figure 4, assembly 10 further comprises a safety device 101 consisting of a pneumatically controlled actuator 103 and a transmission member 104 connected to a toggle slider 106 of actuator 103.

Slider 106 is selectively movable between a retracted position, in which member 104 is released from the pilot valve 27 and from the movable element 45, and an advanced operating position, in which member 104 acts either on the transmission 55 or on the movable element 45 so as to automatically cause a compression of spring 37, and thus increase its preload.

Actuator 103 is configured so as to snap slider 106, and thus member 104, into the operating position in case of emergency, i.e. when the delivery pressure pB drops under a minimum threshold or, similarly, when the loading pressure pM rises over a maximum threshold, in order to automatically increase the delivery pressure pB by increasing the preload of spring 37.

Actuator 103 is of the variable calibration type, i.e. the threshold at which slider 106 is switched can be adjusted by varying the preload of a spring. In particular, when the delivery pressure pB is controlled, the preload of a spring 108a is adjusted, which causes the operation of actuator 103 when the delivery pressure pB drops under the defined threshold. Instead of adjusting spring 108a, the loading pressure pM can be controlled by adjusting the preload of a spring 108: spring 108 causes the operation of actuator 103 when the loading pressure pM rises over a threshold which indicates an excessive drop of the delivery pressure pB.

Thus, adjusting either of these two preloads allows to vary the level of delivery pressure pB for which member 104 must operate on plate 38 to increase the calibration of the pilot valve 27.

In particular, the calibration of actuator 103 is set so as to operate when the delivery pressure pB tends to drop under a threshold which is lower than the minimum set level. For example, such a minimum pressure level is of 18 mbar, while the threshold of delivery pressure pB set by means of the preload of spring 108a is of 17 mbar. If spring 108 is used, the threshold depends on the type of valve 20 installed, and in particular on the maximum loading pressure of the valve 20 itself.

When the delivery pressure pB, i.e. the distribution network pressure, reaches the aforesaid threshold, slider 106 suddenly communicates into the operating position and pushes member 104 so as to compress spring 37. The increased preload of spring 37, as explained above, increases the loading pressure pM and therefore the delivery pressure pB (e.g. to a level of 24 mbar, determined by the compression amount of spring 37).

The use of device 101 increases the degree the safety of assembly 10 when the movable element 45 tears or breaks. In this case, indeed, the fuel gas leaks from chamber 42 to cavity 51, therefore the pressure in chamber 42 drops and is no longer capable of carrying out the adjustment. Therefore, the calibration of the pilot valve 27 also drops, and the delivery pressure pB in the distribution network is self-adjusted to the minimum level. If the fuel gas flow rate required by the users cannot be satisfied with this minimum pressure level, the delivery pressure pB tends to drop further and when it reaches either the threshold value (17 mbar) set by means of the preload of spring 108a or the threshold value set by means of the preload of spring 108, actuator 103 switches slider 106 to the operating position.

As explained above, this switching operation shifts member 104 and thus the mechanical transmission 55 to increase the calibration of spring 37, despite the tearing or breakage of the movable element 45, whereby a sufficiently high level for delivery pressure pB is restored.

In the preferred embodiment shown, member 104 is defined by a rod or push rod, which is coaxial to movable element 45 and slider 106. One of the axial ends of member 104 is fixed to slider 106. The opposite axial end, instead, is arranged in chamber 42 in a position facing the movable element 45. An intermediate portion of member 104 engages a hole 110 in body 41 in an axially sliding and fluid-tight manner, e.g. by virtue of the presence of a seal which isolates chamber 42 from the external environment.

The preferred embodiment shown relates to an actuator 103 which is commercially available per se and in the prior art is usually used as an operating sensor member in closing or locking devices. Actuator 103 comprises a body 112, from which slider 106 protrudes. Body 112 is arranged in a fixed position with respect to body 41 and accommodates a locking device 113, which either directly or indirectly holds slider 106 in the retracted position and is of the releasable type to free slider 106, which can then automatically snap to the operating position under the bias exerted by at least one spring 114.

Actuator 103 also preferably comprises a rearming device 115, which can be manually driven to return the slider 106 to the retracted position against the bias of spring 114 and to restore the locking condition exerted by the device 113 on slider 106.

Body 112 has an input mouth 116 which, by means of an offtake 118, receives a pressure signal and transmits it to a variable volume chamber 122 in body 112. In the example shown, such a pressure signal is defined by the control pressure pB and is taken from the delivery tube 3, for example.

Actuator 103 comprises a movable element 124, e.g. a membrane or piston, which delimits one side of chamber 122, is coupled to device 113, e.g. by means of a leverage 126, and is subjected to the opposite forces exerted by the pressure in chamber 122 and by the preload of spring 108a. In other words, the pressure in chamber 122 is compared with the calibration of spring 108a by virtue of the movable element 124. When the delivery pressure pB drops under the pressure threshold determined by the calibration of spring 108a, the movable element 124 moves, alters the balance of leverage 126, and thus releases slider 106.

As an alternative to the control of the control pressure pB, as mentioned above, mouth 116 can be connected to the loading line 30 for transmitting a pressure signal related to the loading pressure pM in chamber 122. In this case, the preload of spring 108 determines a maximum pressure threshold at which device 101 must be operated. The movable element 124 moves, alters the balance of leverage 126, and thus releases slider 106 only when the loading pressure pM rises over the maximum threshold.

According to a variant (not shown), a first and at least a second supply line arranged in parallel are provided, instead of the above-described line 1. The first and second supply lines are provided with a first and a second pressure reducer assembly, respectively, each of which has a pressure reducer valve and a pilot valve similar to the above-described valves 20 and 27. After the pressure reduction, the first and second lines converge into a single delivery line, which conveys the gas to the users. The first pressure reducer assembly is provided with the above-described adjustment device 40, while the second pressure assembly is preferably free from it.

In this case, the safety device 101 may be installed in the first pressure reducer assembly, so as to form the configuration shown in figure 4, or may be coupled to the pilot valve of the second pressure reducer (without the regulation device, member 104 is directly connected to the plate 38 of such a pilot valve). In both cases, device 101 increases the pressure of the delivery line in a nearly instantaneous manner in case of emergency.

From the above, it is apparent that the adjustment device 40 allows to automatically adapt the level of delivery pressure pB as a function of the users' request. The adjustment device 40, unlike the known solutions, operates in response to a simple pneumatic control, i.e. the loading pressure pM, is of the completely mechanical type, that is free from electric drives or electronics, is easy to be installed, is low-cost and can be applied to all gas distribution system types, regardless of the presence of electricity.

In particular, with regards to installation, it is simply sufficient to provide an offtake of the loading line 30, to fix body 41 and to couple the mechanical transmission 55 to plate 38.

Furthermore, the adjustment device 40 does not need particular periodical maintenance operations, except for those required by the material used for the movable element 45, and its operation is not timed but automatic in response to the fuel gas request by the users.

The components of the adjustment device 40 and of the device 101 are relatively cost-effective and are subject to a relatively low wear as they only are of the pneumatic and mechanical type.

Moreover, the adjustment device 40 allows to solve a further problem which occurs in low pressure fuel gas distribution. Indeed, due to the distribution network development and the continuous increase in the number of users, it is possible that previously installed valve assemblies are no longer capable of delivering the gas flow rate which is required in given peak moments (e.g. at some times of the day during the winter). Adding the adjustment device 40 would allow to increase the variable delivery pressure (e.g. passing from 24 to 26 mbar) and thus to increase the efficiency of the distribution network and meet such peaks.

With regards to device 101, the latter automatically operates to increase the delivery pressure pB when the latter tends to drop under a minimum threshold. Thus, the level of delivery pressure pB automatically adapts in the presence of an emergency situation, in which the request from users is too high as compared to the potentialities that the group 10 would have without device 101. Finally, from the above it is apparent that changes and variations can be made to the adjustment device 40 described without departing from the scope of protection of the present invention, as defined in the appended claims.

In particular, the internal configurations of pilot valve 27, pressure reducer valve 20 and/or actuator 103 could be different from those shown and described above; and/or the mechanical transmission 55 could be different from that shown by way of example; and/or body 41 and connection 44 could be integrated in the valve body 28, i.e. defined by a portion and by an inner channel of the valve body 28, respectively; and/or member 104 could be replaced by a transmission of different type, e.g. by a leverage.

## Claims

1. An adjustment device (40) for automatically calibrating a pilot valve (27) of a pressure reducer assembly for a fuel gas distribution network; the device being **characterized by** comprising:
- a control chamber (42) adapted to receive a first pneumatic signal defined by the loading pressure (pM) which is transmitted, in use, through a loading line (30) from said pilot valve (27) to a pressure reducer valve (20) of said pressure reducer assembly (10);
- a fully mechanical drive, configured so as to automatically increase the preload of a calibration spring (37) of said pilot valve (27) as said first pneumatic signal increases, and so as to automatically decrease said preload as said first pneumatic signal decreases.

2. A device according to claim 1, **characterized by** comprising:
- a body (41) adapted to be arranged in a fixed position with respect to said pilot valve (27) and defining said control chamber (42); and
- a first connection (44) to put said control chamber (42) in communication with said loading line (30).

3. A device according to claim 1 or 2, **characterized in that** said fully mechanical drive comprises:
- a driving element (45) on which the pressure acts in said control chamber (42); said driving element (45) being movable as a function of said pressure;
- a mechanical transmission (55) coupled, at a first end, to said driving element (45); at a second end, said mechanical transmission being adapted to be coupled to a plate (38), which is part of said pilot valve (27) and is movable to vary the preload of said calibration spring (37).

4. A device according to claim 3, **characterized in that** said fully mechanical drive comprises a further spring (49) exerting, on said driving element (45), a force opposite to the pressure in said control chamber (42).

5. A device according to claim 4, **characterized in that** said driving element (45) fluid-tightly separates said control chamber (42) from a cavity (51) which accommodates said further spring (49).

6. A device according to any one of claims 3 to 5, **characterized in that** said driving element (45) fluid-tightly separates said control chamber (42) from a cavity (51); and by comprising a further connection (61) to put said cavity (51) in communication with a delivery tube (3) fed by said pressure reducer valve (20).

7. A device according to any one of claims 3 to 6, **characterized in that** said mechanical transmission (55) is defined by a rod which is coaxial to said driving element (45).

8. A device according to any one of claims 3 to 6, **characterized in that** said mechanical transmission (55) comprises a leverage.

9. A device according to any one of the preceding claims, **characterized by** further comprising safety means (101) consisting of a pneumatically controlled actuator
(103) and of a transmission member (104), connected to a slider (106) of said pneumatically controlled actuator (103); said slider (106) being selectively movable between a retracted position, in which said transmission member
(104) does not operate, and an advanced operating position, in which said transmission member (104) causes a compression of the calibration spring of a pilot valve; said pneumatically controlled actuator (103) having an input mouth (116) adapted to receive a pressure signal, and being configured to snap said slider (106) into the operating position when said pressure signal drops under or raises over an operating threshold; said pneumatically controlled actuator (103) comprising at least a first spring (108a) having a preload which is manually adjustable and defines said operating threshold.

10. A device according to claim 9, **characterized in that** said pneumatically controlled actuator (103) comprises at least a second spring (114) which exerts a bias to automatically move said slider (106) to the operating position.

11. A device according to claim 10, **characterized in that** said pneumatically controlled actuator (103) comprises:
- locking means, which lock said slider (106) in the retracted position and which are releasable to release said slider (106),
- a movable element (124), subject to opposite forces defined by said pressure signal and by said second spring (108a), respectively, and coupled to said locking means so as to cause the release of said slider (106) when said pressure signal either drops under or rises over said operating threshold.

12. A device according to any one of the claims from 9 to 11, **characterized in that** said transmission member (104) is defined by a rod coaxial to said calibration spring.

13. A pressure reducer assembly (10) for a fuel gas distribution network, the assembly comprising:
- a pilot valve (27) of the normally open type, comprising:
a) an output (29) adapted to provide a first pneumatic signal defined by a loading pressure (pM) transmitted by a loading line (30) to a pressure reducer valve (20);
b) a calibration spring (37) having an adjustable preload and exerting an opening action;
c) a chamber (35) adapted to receive a second pneumatic signal defined by the delivery pressure (pB) of a fuel gas which is fed, in use, by said pressure reducer valve (20); said second pneumatic signal exerting a closing action opposite to the opening action of said calibration spring (37) so as to adjust said loading pressure (pM);
- an adjustment device (40) provided according to any one of the preceding claims.

14. An assembly according to claim 13, **characterized by** comprising said pressure reducer valve (20), which is of the normally closed type and is driven to open by said loading pressure (pM) so as to vary the delivery pressure (pB).
